# EUROPEAN PATENT APPLICATION

(11) **EP 2 566 115 A1**
(43) Date of publication of application: **06.03.2013**
(21) Application number: 11789080.6
(22) Date of filing: 24.02.2011
(51) Int. Cl.: H04L 12/58

(54) **METHOD, NETWORK DEVICE AND NETWORK SYSTEM FOR DATA SERVICE PROCESSING**

(30) Priority: 04.06.2010 CN 201010193504
(71) Applicant: Huawei Technologies Co., Ltd., Shenzhen, Guangdong 518129 (CN)
(72) Inventor: DUAN, Haifeng, Shenzhen Guangdong 518129 (CN)
(74) Representative: Pfenning, Meinig & Partner GbR
(86) International application number: PCT/CN2011/071233
(87) International publication number: WO 2011/150701

(57) **Abstract**

The present invention provides a method, a network device, and a network system for processing a data service. The method for processing a data service includes: receiving a data service packet; identifying protocol information and/or service information of the packet; mapping the protocol information and/or service information to a corresponding type of service field, and changing a type of service value of the packet according to the mapped-to type of service field; and performing queue scheduling for the packet according to the type of service value of the packet. The present invention effectively reduces the cost of the QoS implementation solution, prevents a low-priority application server from forging high-priority services, and prevents a high-priority port from being used to bear low-priority services.

## Description

This application claims priority to Chinese Patent Application No. 201010193504.1, filed with the Chinese Patent Office on June 4, 2010 and entitled "METHOD, NETWORK DEVICE, AND NETWORK SYSTEM FOR PROCESSING DATA SERVICE", which is incorporated herein by reference in its entirety.

### FIELD OF THE INVENTION

The present invention relates to the field of communications technologies, and in particular, to a method, a network device, and a network system for processing a data service on an IP network.

### BACKGROUND OF THE INVENTION

Multimedia services that emerge on an IP network impose higher requirements for quality of service (Quality of Service, QoS) in an IP environment. Efforts of various IT companies have combined to promote quick development of public and private networks to diversified and more challenging service combinations. Services on the Internet, such as packet voice, interactive television, and streaming media on demand, have greatly reduced cost, and led to fundamental changes to the communications industry. The QoS required by all these real-time multimedia applications is far higher than the best-effort service class that can be currently provided by the Internet. At present, the Internet is far from delivering reliability and performance that enterprises require and are used to on their private networks. Before being assured of the security, predictability, and measurability, commercial customers are not yet likely to place data, voice, and multimedia applications of key services on public IP networks.

For modem enterprises, as the communications industry and transportation industry quickly grow, the business scope of an enterprise inevitably extends to the whole nation or even the entire globe. Setting up offices or foreign organizations becomes an unavoidable process for most enterprises. However, problems such as effective communication with offices trouble enterprises. At present, telecom operators such as China Telecom and China Netcom provide private line interconnection services such as DDN and frame relay for enterprises. These services help meet the purpose of interconnecting enterprise branches. However, this is not an economic or practical method as the operating expenses amount to thousands a month. In addition, enterprise networks need to be directly connected to the networks of telecom operators without encryption, so enterprises cannot freely control the security assurance.

In the prior art, virtual private networks (VPN, Virtual Private Network) may be established for services that require high QoS. VPN endpoints label and classify TOS fields of outgoing IP packets according to allocated QoS. Network devices (switches, routers, and firewalls) on a network schedule and assure QoS according to the TOS fields. By using the VPN technology, data of each branch of an enterprise after being encrypted is transmitted over a virtual tunnel, built on the Internet by using dedicated software, to the local area networks of other branches or the headquarter. By using this technology, the branches seem to be directly connected by using a private line. In addition, each branch only needs to apply for a common line for Internet access services, for example, ADSL and LAN. However, establishing a private VPN for high-priority services and enterprises increases the construction cost and maintenance cost. In addition, the VPN cannot dynamically identify services, but can only allocate different priorities fixedly according to the source and destination IP addresses and source and destination port numbers.

Therefore, in the prior art, to implement QoS control for differentiated services and different enterprise networks, a private VPN needs to be established for different services and enterprise networks, which increases the construction cost and maintenance cost. In addition, during TOS mapping for IP QoS on application servers, fraud behavior where an application server with low-priority services forges high-priority services may exist. Furthermore, during service identification according to ports, fraud behavior where a high-priority port is used to bear low-priority services exists.

### SUMMARY OF THE INVENTION

The purpose of the present invention is to provide a method for processing a data service, and a network device and a network system for processing a data service packet, so as to solve the technical problem that establishing a private VPN increases the construction cost and maintenance cost.

An embodiment of the present invention provides a method for processing a data service, including the following steps:
receiving a data service packet; identifying protocol information and/or service information of the data service packet; mapping the protocol information and/or service information to a corresponding type of service ToS field, and changing a type of service value of the packet according to the mapped-to type of service field; and performing queue scheduling for the packet according to the type of service value of the packet.

Another embodiment of the present invention provides a network device for processing a data service packet, including: a packet receiving unit, configured to receive a data service packet; a packet information identifying unit, configured to identify protocol information and/or service information of the packet; a type of service mapping unit, configured to map the protocol information and/or service information to a corresponding type of service field, and changing a type of service value of the packet according to the mapped-to type of service field; a queue scheduling unit, configured to perform queue scheduling for the packet according to the type of service value of the packet; and a packet sending unit, configured to forward the data service packet.

Another embodiment of the present invention provides a network system for processing a data service packet, including: a network access server, an edge router, and an application server. The network access server is configured to connect a terminal to a network, identify protocol information and/or service information in a data request packet after receiving the data request packet from the terminal, and map the protocol information and/or service information of the data request packet to a corresponding type of service field; establish a flow table according to the mapped-to type of service field, and change the type of service field of the packet that matches a flow table entry to a corresponding type of service value; perform queue scheduling for the packet according to the type of service value of the packet; and forward the data service request packet to the network side. The edge router is configured to connect the application server to the network, identify the protocol information and/or service information in the data request packet after receiving the data request packet from the network side, and map the protocol information and/or service information of the data request packet to a corresponding type of service field; establish a flow table according to the mapped-to type of service field, and change the type of service field of the packet that matches a flow table entry to a corresponding type of service value; perform queue scheduling for the packet according to the type of service value of the packet; and forward the data request packet to the corresponding application server. The application server is configured to receive the data request packet, and then send a data response packet.

According to the embodiments of the present invention, as no private VPN needs to be established for high-priority services and enterprise networks, the cost of the QoS implementation solution is effectively reduced; the application server does not need to be reconstructed, preventing a low-priority application server from forging high-priority services; ports are not needed to identify services, preventing a high-priority port from being used to bear low-priority services.

### BRIEF DESCRIPTION OF THE DRAWINGS

The accompanying drawings herein are provided to further explain the embodiments of the present invention and constitute a part of the present invention, but do not limit the present invention. In the accompanying drawings:

FIG. 1 is a flow chart of a method for processing a data service according to Embodiment 1 of the present invention;

FIG. 2 is a flow chart of a network device for processing a data service according to Embodiment 2 of the present invention; and

FIG. 3 is a schematic structural diagram of a network system for processing a data service according to Embodiment 3 of the present invention.

### DETAILED DESCRIPTION OF THE EMBODIMENTS

In order to make the objectives, technical solutions, and advantages of the present invention more comprehensible, the following describes the embodiments of the present invention in further detail according to the embodiments with reference to the accompanying drawings. The exemplary embodiments of the present invention and the description thereof are illustrative in nature, and shall not be construed as limitations on the present invention.

### Embodiment 1

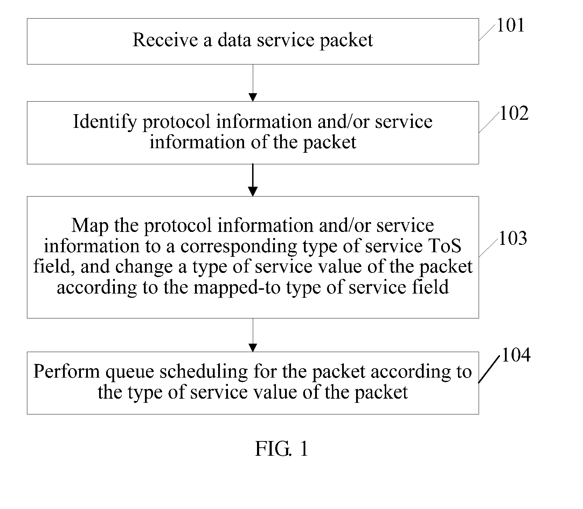

This embodiment provides a method for processing a data service. As shown in FIG. 1, the method includes the following steps.

Step 101: Receive a data service packet.

A network device receives a data service packet. The data service packet may be a data request packet sent by a terminal, and may also be a data response packet sent by an application server.

Step 102: Identify protocol information and/or service information of the data service packet.

Protocol information of a packet generally includes protocol type and so on.

Service information of a packet generally includes: type of service of the packet. Certainly, the service information may further include user brand, user priority, quality of service (QoS, Quality Of Service) table, access point name (APN, Access Point Name) information, time segment, accumulative traffic volume, accumulative duration, bearer type, type of service field, and so on.

The network device may identify protocol information and service information of the packet by using a deep packet inspection (DPI, Deep Packet Inspection) technology. The DPI technology is a technology used by a bandwidth management system in regrouping application layer information in the OSI seven-layer protocol by deeply reading content of IP packet payload to obtain content of an entire application. For example, in this embodiment, it may be identified by using the DPI technology that the protocol of the packet is HTTP protocol and this protocol corresponds to WEB browsing services. Certainly, a packet identifying unit may further identify the protocol and/or service information of the packet by using other means, for example, may identify the protocol or service information of the packet provided by the operator or obtained by the network device from inside. For example, the information may be synchronized from the BSS system of the operator, or a GUI interface may be provided for manual input by the maintenance personnel of the operator. Other different means may be used to identify the protocol information and/or service information of the packet, which is not limited in the embodiment of the present invention. Only the protocol information may be identified, or only the service information may be identified, or both the protocol information and the service information may be identified, where multiple pieces or one piece of protocol information or service information may be included, which is not limited in this embodiment.

Step 103: Map the protocol information and/or service information of the packet to a corresponding type of service field, and change a type of service value of the packet according to the mapped-to type of service field.

This step is executed by a type of service mapping unit of the network device. Specifically, the type of service mapping unit establishes a flow table according to the mapped-to ToS field, records a corresponding ToS value in a flow table entry, and changes ToS fields of all packets corresponding to the flow to the corresponding ToS value.

Step 104: Perform queue scheduling for the packet according to the type of service value of the packet.

Further, when another data service packet is received subsequently, the flow table may be queried according to an IP quintuple of the packet first. If a corresponding flow table entry is found, the type of service field of the packet corresponding to the flow is changed to the corresponding type of service value. If no corresponding flow table entry is found, packet identification is performed again, and protocol and/or service information of the packet is mapped to a corresponding type of service field.

According to this embodiment, protocol and/or service information of a packet is mapped to a corresponding type of service field, a type of service value of the packet is changed according to the mapped-to type of service field, and scheduling is performed according to the type of service value. As such, the QoS control solution can be effectively implemented without the need to establish a private VPN for high-priority services and enterprise networks, preventing a low-priority application server from forging high-priority services, and preventing a high-priority port from being used to bear low-priority services.

### Embodiment 2

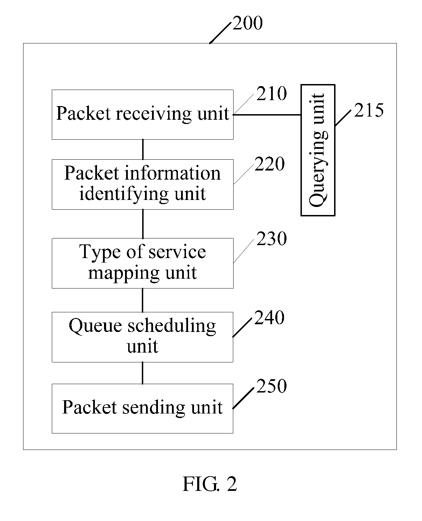

This embodiment provides a network device for processing a data service, for example, an edge router, a network access server (NAS), a switch, a router, a firewall, and the like. As shown in FIG. 2, the network device 200 includes:
a packet receiving unit 210, configured to receive a data service packet, including a data request packet sent by a terminal and a data response packet sent by an application server;
a packet information identifying unit 220, configured to identify protocol information and/or service information of the packet, where for the specific identification method, reference may be made to step 102 in the aforementioned embodiment, and the method is not described herein;
a type of service mapping unit 230, configured to map the protocol information and/or service information identified by the packet information identifying unit 220 to a type of service field, and change a type of service value of the packet according to the mapped-to type of service field; specifically, establish a flow table according to the mapped-to type of service field; record a type of service value corresponding to the data flow in a flow table entry; and change the type of service field of the packet corresponding to the data flow to the corresponding type of service value;
a queue scheduling unit 240, configured to perform queue scheduling for the packet according to the type of service value of the packet; and
a packet sending unit 250, configured to forward the data service packet.

In addition, the network device provided in this embodiment may further include a querying unit 215, configured to query, according to the received data service packet, the flow table established by the data type mapping unit 230. If a corresponding flow table entry is found, the type of service mapping unit 230 changes the type of service field of the packet corresponding to the flow to the corresponding type of service value. If no corresponding flow table entry is found, the packet information identifying unit 220 identifies protocol information and/or service information of the packet, and the type of service mapping unit 230 maps the protocol information and/or service information of the packet to a corresponding type of service field, and changes the type of service value of the packet according to the mapped-to type of service field. The queue scheduling unit 240 performs queue scheduling for the packet according to the type of service value of the packet. The packet sending unit 250 is configured to forward the data service packet.

The network device according to this embodiment identifies protocol and/or service information of a packet, and maps the protocol and/or service information to a corresponding type of service field. As such, the QoS implementation solution can be effectively implemented without the need to establish a private VPN for high-priority services and enterprise networks, preventing a low-priority application server from forging high-priority services, and preventing a high-priority port from being used to bear low-priority services.

### Embodiment 3

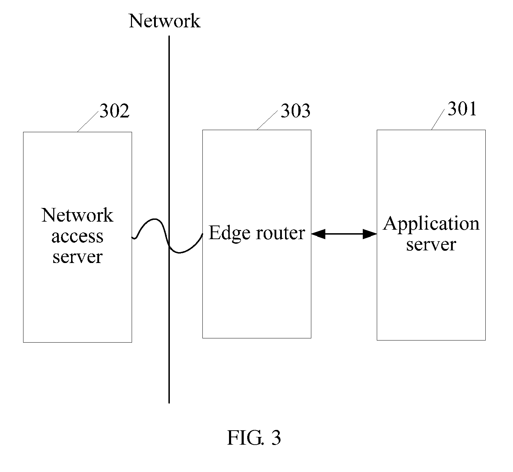

This embodiment provides a network system for processing a data service packet. As shown in FIG. 3, the network system includes:
an application server 301, configured to receive a data request packet sent by a terminal (not shown in the figure), and send a data response packet;
a network access server 302, configured to connect the terminal to a network, identify protocol information and/or service information of the data request packet sent by the terminal after receiving the packet, and map the protocol information and/or service information of the data request packet to a corresponding type of service field; establish a flow table according to the mapped-to type of service field, where data information recorded in the flow table includes an IP quintuple and the corresponding ToS field, and change the type of service field of the packet that matches a flow table entry to a corresponding type of service value; perform queue scheduling for the packet according to the type of service value of the packet; and forward the data service request packet to a network side, where
accordingly, the network access server 302 queries the flow table after receiving the data response packet from the network side, changes the corresponding type of service field to the corresponding type of service value, performs queue scheduling, and forwards the data response packet to the corresponding terminal; and
an edge router 303, configured to connect the application server to the network, map the protocol information and/or service information of the data request packet to a corresponding type of service field after receiving the data request packet from the network side; establish a flow table according to the mapped-to type of service field, and change the type of service field of the packet that matches a flow table entry to a corresponding type of service value; perform queue scheduling for the packet according to the type of service value of the packet; forward the data request packet to the corresponding application server; query the flow table after receiving the data response packet sent by the application server, change the corresponding type of service field to the corresponding type of service value, and perform queue scheduling; and forward the data response packet to the network side.

In addition, the network system provided in this embodiment may further include an apparatus such as a backbone router or a switch, configured to perform queue scheduling for a data service packet according to a type of service field of the packet, and then forward the data service packet.

The network system according to this embodiment identifies protocol and/or service information of a packet, and maps the protocol and/or service information to a corresponding type of service field. As such, the QoS implementation solution can be effectively implemented without the need to establish a private VPN for high-priority services and enterprise networks, preventing a low-priority application server from forging high-priority services, and preventing a high-priority port from being used to bear low-priority services.

Persons of ordinary skill in the art should understand that all or a part of the steps of the methods in the embodiments may be implemented by a program instructing relevant hardware. The program may be stored in a computer readable storage medium. When the program is run, the steps of the methods in the embodiments are performed. The storage medium may be any medium that is capable of storing program codes such as a ROM, a RAM, a magnetic disk, and an optical disk.

The objectives, technical solutions, and beneficial effects of the present invention have been described in further detail through the above specific embodiments. It should be understood that the above descriptions are merely specific embodiments of the present invention, but not intended to limit the protection scope of the present invention. Any modification, equivalent replacement, or improvement made without departing from the principle of the present invention should fall within the protection scope of the present invention.

## Claims

1. A method for processing a data service, comprising the following steps:
receiving a data service packet;
identifying protocol information and/or service information of the data service packet;
mapping the protocol information and/or service information to a corresponding type of service ToS field, and changing a type of service value of the packet according to the mapped-to type of service field; and
performing queue scheduling for the packet according to the type of service value of the packet.

2. The method according to claim 1, wherein the identifying the protocol information and/or service information of the packet comprises:
identifying the protocol information and/or service information of the packet by using a deep packet inspection DPI technology.

3. The method according to claim 1 or 2, wherein:
the protocol information comprises a protocol type; and
the service information comprises at least one of the following information:
quality of service information, access point name information, time segment information, accumulative traffic volume information, accumulative duration information, a bearer type, and a type of service.

4. The method according to claim 1, wherein the changing the type of service field value of the packet according to the mapped-to type of service field specifically comprises:
establishing a flow table according to the mapped-to type of service field;
recording a type of service value corresponding to the data flow in a flow table entry; and
changing the type of service value of the packet corresponding to the data flow to the corresponding type of service value.

5. The method according to claim 4, wherein before the identifying the protocol information and/or service information of the packet, the method comprises:
querying the flow table according to IP quintuple information of the data packet; and
if a corresponding flow table entry is found in the flow table, changing type of service fields of all packets corresponding to the flow to the corresponding type of service value.

6. A network device for processing a data service packet, comprising:
a packet receiving unit, configured to receive a data service packet;
a packet information identifying unit, configured to identify protocol information and/or service information of the packet;
a type of service mapping unit, configured to map the protocol information and/or service information to a corresponding type of service field, and change a type of service value of the packet according to the mapped-to type of service field;
a queue scheduling unit, configured to perform queue scheduling for the packet according to the type of service value of the packet; and
a packet sending unit, configured to forward the data service packet.

7. The network device according to claim 6, wherein the type of service mapping unit is specifically configured to establish a flow table according to the mapped-to type of service field; record a type of service value corresponding to the data flow in a flow table entry; and change the type of service field of the packet corresponding to the data flow to the corresponding type of service value.

8. The network device according to claim 7, wherein the network device further comprises:
a querying unit, configured to query the flow table according to the received data service packet, wherein
if a corresponding flow table entry is found in the flow table, the type of service mapping unit changes the type of service field of the packet corresponding to the flow to the corresponding type of service value.

9. A network system for processing a data service packet, comprising a network access server, an edge router, and an application server, wherein
the network access server is configured to connect a terminal to a network, identify protocol information and/or service information in a data request packet after receiving the data request packet from the terminal, and map the protocol information and/or service information of the data request packet to a corresponding type of service field; establish a flow table according to the mapped-to type of service field, and change the type of service field of the packet that matches a flow table entry to a corresponding type of service value; perform queue scheduling for the packet according to the type of service value of the packet; and forward the data service request packet to the network side;
the edge router is configured to connect the application server to the network, identify the protocol information and/or service information in the data request packet after receiving the data request packet from the network side, and map the protocol information and/or service information in the data request packet to a corresponding type of service field; establish a flow table according to the mapped-to type of service field, and change the type of service field of the packet that matches a flow table entry to a corresponding type of service value; perform queue scheduling for the packet according to the type of service value of the packet; and forward the data request packet to the corresponding application server; and
the application server is configured to receive the data request packet, and then send a data response packet.

10. The network system according to claim 9, wherein:
the edge router is further configured to: query the flow table after receiving the data response packet sent by the application server, and if a corresponding flow table entry is found, change the corresponding type of service field to the corresponding type of service value, perform queue scheduling, and forward the data response packet to the network side; and
the network access server is further configured to: query the flow table after receiving the data response packet from the network side, and if the corresponding flow table entry is found, change the corresponding type of service field to the corresponding type of service value, perform queue scheduling according to the type of service value, and forward the data response packet to the corresponding terminal.
